# EUROPÄISCHE PATENTSCHRIFT

(11) **EP 0 700 487 B1**
(45) Veröffentlichungstag und Bekanntmachung des Hinweises auf die Patenterteilung: **22.03.2000**
(21) Anmeldenummer: 94915509.7
(22) Anmeldetag: 26.05.1994
(51) Int. Cl.: F16D 65/56

(54) **SCHEIBENBREMSE, INSBESONDERE FÜR FAHRZEUGE**
DISC BRAKE, ESPECIALLY FOR VEHICLES
FREIN A DISQUE, NOTAMMENT POUR VEHICULES

(30) Priorität: 02.06.1993 FR 9306553
(43) Veröffentlichungstag der Anmeldung: 13.03.1996
(73) Patentinhaber: KNORR-BREMSE Systeme für Nutzfahrzeuge GmbH, 80809 München (DE)
(72) Erfinder: BEJOT, Philippe, F-75008 Paris (FR); MONTEILLET, Jean, Claude, F-93700 Drancy (FR); BOLUDA, José, Manuel, Vila, E-08520 Barcelone (ES); BUSQUETS, J., Ruiz, E-08820 El Prat de Llobregat (ES)
(86) Internationale Anmeldenummer: DE9400602
(87) Internationale Veröffentlichungsnummer: WO9428331

(56) Entgegenhaltungen:
- EP-A- 0 186 535
- EP-A- 0 499 970
- WO-A-92/07202
- DE-B- 1 258 209
- FR-A- 2 548 310
- GB-A- 2 114 692
- US-A- 3 346 080

## Beschreibung

Die Erfindung betrifft eine Scheibenbremse, insbesondere für Fahrzeuge, gemäß Patentanspruch 1.

Scheibenbremsen für Fahrzeuge sind als Konstruktionen mit Schiebesattel und einspindeliger Betätigung unter Verwendung eines Exzentermechanismus bekannt (FR-A-2,548,309), bei welchem ein Drehhebel unter Verwendung achsversetzter Drehteile und der sich hierdurch ergebenden Exzentrizität auf ein an einem Ende einer Spindel befindliches Druckstück und über dieses auf eine Scheibenbremse einwirkt.

Bei einer weiterhin bekannten Anordnung (WO92/07202) ist eine mit zwei Druckspindeln versehene Scheibenbremse vorgesehen, bei welcher ein Drehhebel über eine Exzenteranordnung auf eine Brücke bzw. Traverse einwirkt, welche Druck- bzw. Stellspindeln zur Einwirkung an der Bremsscheibe trägt. Bei Scheibenbremsen dieser Wirkungsweise ist eine Nachstellvorrichtung vorgesehen, welche sich in einer der Stellspindeln befindet und über eine Synchronisiereinrichtung die Nachstellwirkung auf die zweite Stellspindel zu übertragen vermag. Der bei derartigen Bremsen am unteren Ende des zur Betätigung dienenden Drehhebels befindliche Exzenter befindet sich bremsscheibenabgewandt an der Rückseite eines in Lagern drehbar geführten Bolzens, welcher mittels mit axialem Abstand zueinander befindlicher Wälzlager gegenüber der Rückseite der Traverse wirkt.

Davon ausgehend besteht die Aufgabe der Erfindung darin, eine Scheibenbremse der in Rede stehenden Art hinsichtlich der Exzenterbetätigung und hinsichtlich der Nachstelleinrichtung zu vereinfachen, wobei zuverlässige Wirkungsweise im Betrieb des mit einer derartigen Bremse versehenen Fahrzeugs gewährleistet sein soll.

Zur Lösung dieser Aufgabe dienen die Merkmale nach Patentanspruch 1. Die Schei' benbremse gemäß der Erfindung zeichnet sich durch einen einfachen Aufbau des Exzentermechanismus aus, da unmittelbar gegenüber dem Druckstück der Scheibenbremse zur Wirkung gelangende Lagerteile des Exzenters infolge der einspindeligen Konstruktion zu beiden Seiten des Drehhebels angeordnet sind und einteilig mit diesem bestehen. In baulich vorteilhafter Weise ist der Nachstellmechanismus der Bremse innerhalb der die Exzenter-Lagerteile tragenden Welle und im Inneren des in Richtung der Bremsscheibe sich erstreckenden, unmittelbar beaufschlagten Druckstücks verwirklicht, was zum Zwecke des Bremsbelagwechsels einen einfachen Zugriff am Nachstellmechanismus ermöglicht. Auch der Austausch von Bestandteilen des Nachstellmechanismus und die Wartung desselben ist vereinfacht.

Vorteilhafte Ausgestaltungen und Weiterbildungen sind in weiteren Patentansprüchen ausgeführt.

Die Erfindung ist nachfolgend anhand mehrerer Ausführungsbeispiele unter Bezugnahme auf die beigefügte Zeichnung erläutert.
Fig. 1 ist eine Schnittansicht der erfindungsgemäßen Bremse entlang einer senkrecht zur ersten Achse und parallel zur zweiten Achse verlaufenden Ebene;
Fig. 2 ist eine gestreckte Perspektivansicht der wesentlichen Bauteile der Bremse nach der Erfindung;
Fig. 3 ist eine Perspektivansicht der drehbaren Hebelanordnung in einer entgegengesetzt zur Blickrichtung nach Fig. 2 liegenden Ansicht;
Fig. 4 ist eine Schnittansicht der erfindungsgemäßen Bremse entlang einer Ebene, welche parallel zu den ersten und zweiten Achsen verläuft, unter Darstellung einer ersten Ausführungsform der Mittel zur Verschleißnachstellung;
Fig. 5 ist eine gestreckte Draufsicht der erfindungsgemäßen Bremse der Darstellung nach Fig. 4;
Fig. 6 ist eine Schnittansicht der erfindungsgemäßen Bremse in einer parallel zur ersten und zweiten Achse verlaufenden Ebene, unter Darstellung einer zweiten Ausführungsform der Mittel zur Verschleißnachstellung;
Fig. 7 ist eine gestreckte Draufsicht der erfindungsgemäßen Bremse gemäß Fig. 6;
Fig. 8 ist eine Schnittansicht der erfindungsgemäßen Bremse in einer parallel zur ersten und zweiten Achse verlaufenden Ebene, unter Darstellung einer dritten Ausführungsform der Mittel zur Verschleißnachstellung; und
Fig. 9 ist eine gestreckte Draufsicht der erfindungsgemäß Bremse nach Fig. 8.

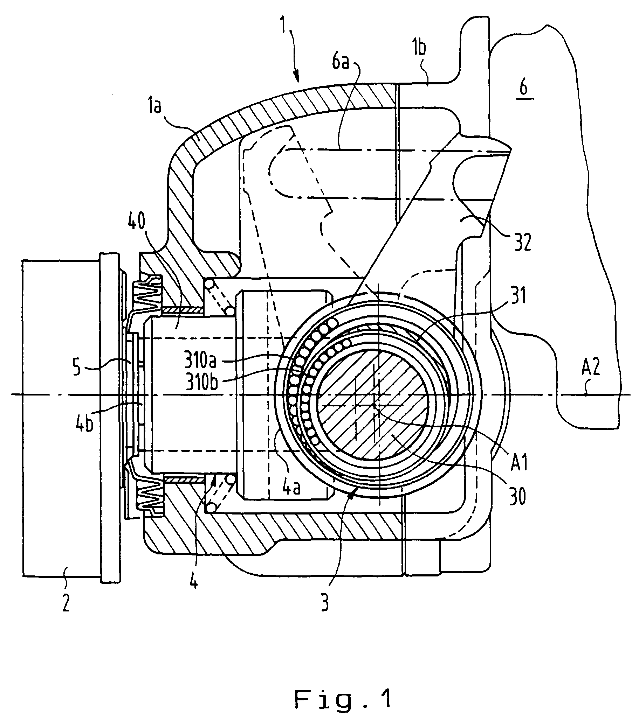

Wie in Fig. 1 dargestellt ist, weist die Scheibenbremse nach der Erfindung ein Gehäuse 1 auf, welches an dem mit der Scheibenbremse ausgestatteten Fahrzeug befestigt ist und aus zwei miteinander in Verbindung stehenden Teilen 1a und 1b besteht. Ein durch die Bremse betätigbarer Bremsbelag 2 ist relativ zum Gehäuse verlagerbar, um mit der drehbar mit den Rädern des Fahrzeugs verbundenen Bremsscheibe (nicht dargestellt) in Eingriff zu gelangen. Es ist eine Hebelanordnung 3 vorgesehen, welche im Gehäuse um eine Achse A1 drehbar ist und eine mit einem Exzenter 31 versehene Welle 30 und einen Drehhebel 32 aufweist. Es ist ferner ein Exzenter-Folgeteil in Form eines Druckstücks 4 mit einem ersten Ende 4a und einem zweiten Ende 4b vorgesehen. Am ersten Ende 4a liegt der Exzenter 31 an, während das Druckstück mit dem zweiten Ende 4b mittels eines Druckstückkopfes 5 auf den Bremsbelag 2 einwirkt.

Der Drehhebel 32 ist mit der Welle 30 verbunden und erstreckt sich im wesentlichen senkrecht zur Achse A1, derart, daß die Welle 30 um die Achse A1 drehbar ist, wenn auf den Drehhebel ein Druck ausgeübt wird, so z. B. indem mittels der Druckstange 6a einer am Gehäuse 1 fixierten pneumatischen Zuspanneinrichtung 6 ein Druck in Richtung des Bremsbelags 2 zur Einwirkung gelangt. Die Druckstange ist in Fig. 1 in gestrichelten Linien in einer extremen Betätigungsposition der Bremse wiedergegeben.

Das Exzenter-Folgeteil in Form des Druckstücks 4 ist im Gehäuse 1 entlang einer zweiten Achse A2 verschiebbar, welche im wesentlichen senkrecht zur ersten Achse A1 ausgerichtet ist, d. h. das Druckstück bewegt sich unter Einwirkung der vom Exzenter 31 ausgeübten Kraft gemäß Fig. 1 nach links gerichtet, wenn sich die Welle 30 dreht, derart, daß der Bremsbelag 2 gegen die (nicht dargestellte) Bremsscheibe angedrückt wird.

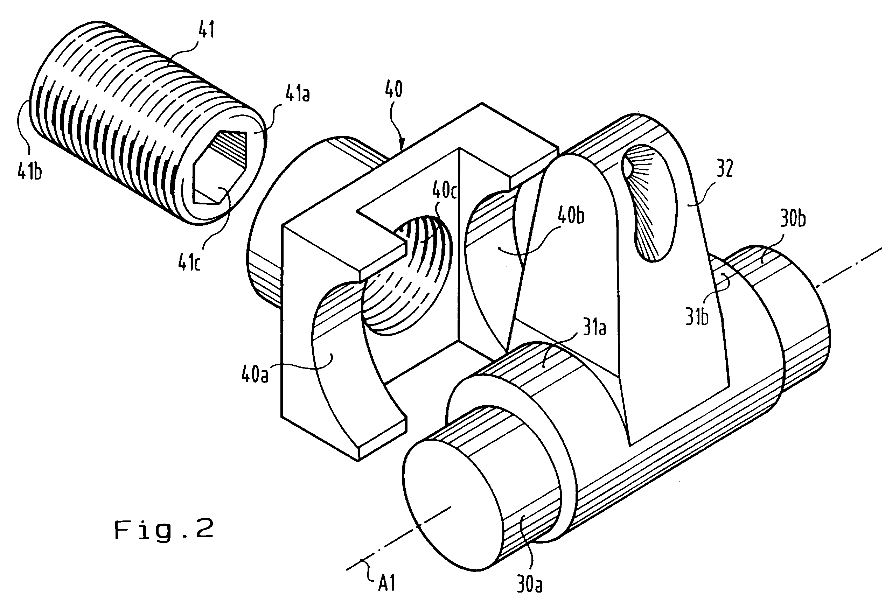

Gemäß Fig. 2 besitzt der Exzenter 31 zwei Lagerteile 31a und 31b, d. h. zwei Zylinderkörper, welche bezüglich der Achse A1 versetzt sind, deren Achse jedoch parallel zu dieser verläuft. Die beiden Zylinder sind beidseitig des Drehhebels 32 an der Welle 30 ausgebildet.

Darüber hinaus besitzt das Druckstück 4 an der Seite seines ersten Endes 4a eine Mutter 40 mit einer mittigen Gewindebohrung 40c und zwei seitlichen und im wesentlichen halbzylindrischen Lagerschalen 40a und 40b, welche zur Aufnahme der entsprechenden Lagerteile 31a und 31b des Exzenters 31 dienen. Das Druckstück umfaßt ferner eine Schraube 41, deren erstes Ende 41a in die Gewindebohrung 40c der Mutter 40 eingreift, während das zweite Ende 41b das zweite Ende 4b des Druckstücks 4 bildet.

Es ist eine nachfolgend unter Bezugnahme auf die Zeichnung erläuterte Vorrichtung zur Verschleißnachstellung vorgesehen, mittels welcher die Schraube bezüglich der Mutter als Funktion des Verschleißes des Bremsbelags 2 abgeschraubt bzw. losgeschraubt wird, um zunehmend den Abstand zwischen der ersten Achse A1 und dem zweiten Ende 4b des Druckstücks 4 durch Verlängerung desselben zu vergrößern.

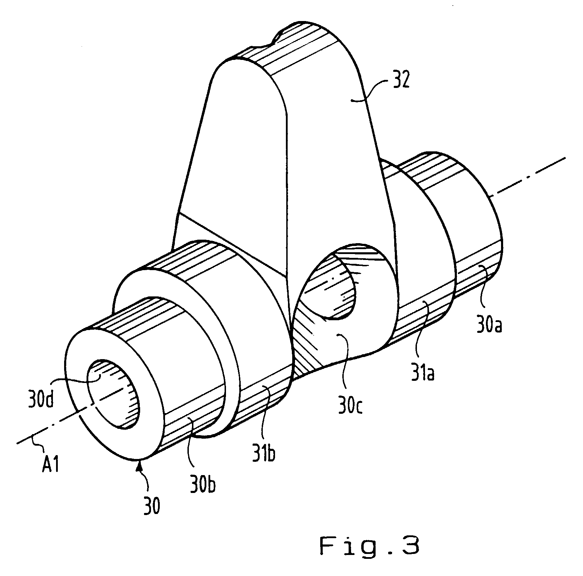

Nach einem wesentlichen Merkmal der Erfindung ist die Hebelanordnung 3 einteilig ausgebildet, wobei aus der Welle 30 eine in Fig. 3 ersichtliche Ausnehmung 30c herausgearbeitet ist. Die Ausnehmung 30c ist in Richtung der mittigen Gewindebohrung 40c der Mutter 40 ausgerichtet und nimmt das erste Ende 41a der Schraube 41 auf, welche sich über die Gewindebohrung 40c hinaus erstreckt, wenn der Reibbelag 2 neu oder nur wenig abgenutzt ist. Die Länge der Schraube ist folglich größer, als der Länge der Gewindebohrung entspricht.

Gemäß Fig. 3 und den nachfolgenden Figuren ist die Weile 30 auf wenigstens einem Teil ihrer Länge von einer Bohrung 30d durchsetzt, welche entlang der ersten Achse A1 verläuft und es ermöglicht, wenigstens ein Teil der Bauteile für die Verschleißnachstellung aufzunehmen.

Letztere enthalten wenigstens ein erstes Ritzel 71, welches in der Bohrung 30d teilweise drehbar mit der Welle 30 verbunden ist, als auch ein zweites Ritzel 72, welches mit dem ersten Ritzel im Eingriff ist und sich innerhalb der Schraube 41 entlang der zweiten Achse A2 erstreckend drehbar mit dieser Schraube verbunden ist.

Da die Funktion der Schraube 41 darin besteht, sich beim Abschrauben bezüglich der Mutter 40 entlang der Achse A2 zu bewegen, während das zweite Ritzel 72 eine im wesentlichen konstante Position entlang dieser Achse behält, sind Mittel vorgesehen, um die Schraube und das zweite Ritzel 72 drehbar zu verbinden, während gleichzeitig die Schraube bezüglich dieses Ritzels verlagert werden kann.

So kann das zweite Ritzel (Fig. 2, 4 und 5) mit einem Schaft bzw. einer Spindel 72a von 6-eckigem Querschnitt versehen sein, in jedem Fall mit einem nichtkreisförmigen Querschnitt, wobei die Spindel in ein komplementär geformtes Innenprofil 41c der Schraube eingeführt ist, welche den Innenquerschnitt eines befestigten Bauteils 8 bildet.

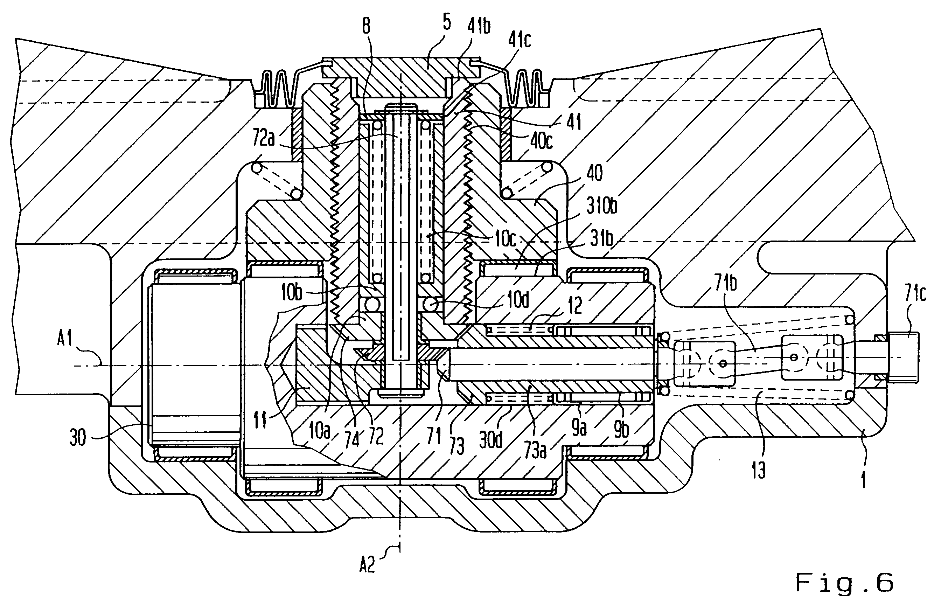

Als Variante (Fig. 6 - 9) kann das Bauteil 8 z. B. an der Spindel 72a des zweiten Ritzels 72 befestigt sein und sich ohne Möglichkeit der Drehung innerhalb des Innenprofils 41c der Schraube befinden.

Das zweite Ritzel 72 und die Schraube 41 sind mittels einer kinematischen Kette drehbar mit der Welle 30 der Hebelanordnung 3 verbunden; diese kinematische Kelle umfaßt einen Freilauf 9 und einen Drehmomentbegrenzer 10. Der Freilauf 9 besteht aus einem äußeren Käfig 9a und einem inneren Käfig 9b, welche in einer Richtung im Drehsinn miteinander verbunden sind. Der Drehmomentbegrenzer entspricht der an sich bekannten Kugel-Bauart unter Verwendung von zwei Scheiben 10a und 10b, welche mittels einer Feder 10c gegeneinander gedrückt werden und einander zugewandt entgegengesetzt gerichtete Ausnehmungen enthalten, in welchen sich Kugeln 10d befinden.

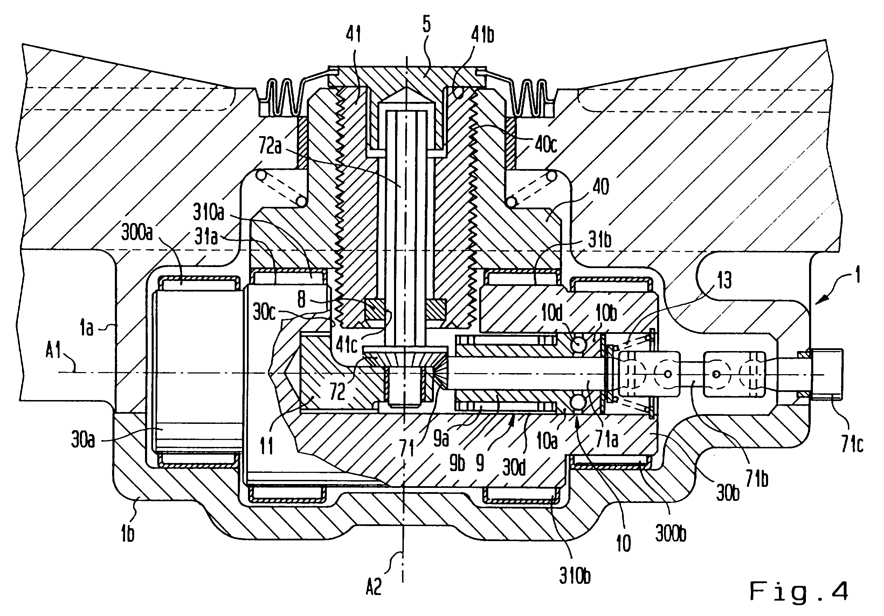

Wie in jeder der Fig. 4 - 9 ersichtlich ist, werden das zweite Ritzel 72 und seine Spindel 72a entlang der zweiten Achse A2 gegenüber Längsverschiebung abgesichert, indem das Ende der Spindel 72a in einem zylindrischen Bauteil 11 gehaltert ist. Das Bauteil 11 befindet sich in der Bohrung 30d und kann durch die Ausnehmung 30c in diese Position eingefügt werden.

Das erste Ritzel 71 ist mit einem Schaft bzw. einer Spindel versehen, welche in Querrichtung in Art eines Kardangelenks auslenkbar ist und vorzugsweise mehrere drehbar verbundene Teile 71a, 71b, 71c aufweist, wobei sich die Teile über die das Gehäuse 1 durchsetzende Bohrung 30d hinaus erstrecken, derart, daß eine Drehung des ersten Ritzels 71 um die Achse A1 von außerhalb des Gehäuses vollziehbar ist, wenn auf das Teil 71c ein Drehmoment ausgeübt wird.

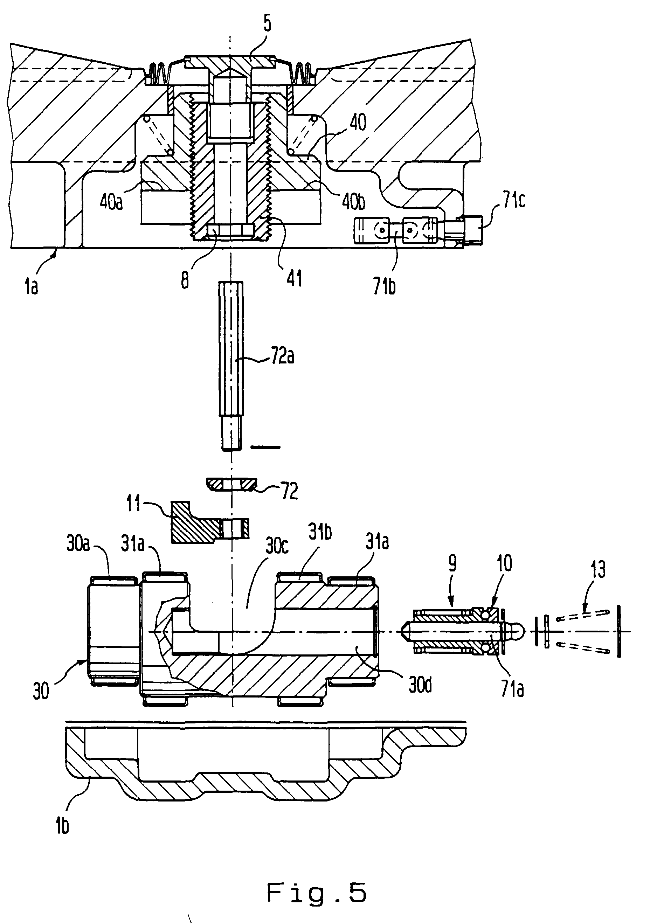

Gemäß der ersten Ausführungsform der Mittel zur Verschleißnachstellung, welche in den Fig. 4 und 5 dargestellt sind, befindet sich der Freilauf 9 in der Bohrung 30d der Welle 30, derart, daß sein äußerer Käfig 9a drehbar gegenüber dieser Bohrung abgesichert ist. Der Drehmomentbegrenzer ist gleichfalls in dieser Bohrung angeordnet und verbindet drehbar den inneren Käfig 9b des Freilaufs mit dem ersten Ritzel.

Gemäß Fig. 4 ermöglicht es eine derartige Anordnung, die Anzahl der Ritzel auf zwei zu reduzieren, wobei die Feder 13 des Drehmomentbegrenzers verwendbar ist, um das erste Ritzel in Richtung des zweiten zu drücken, da einerseits die Feder an der Scheibe 10b des Drehmomentbegrenzers anliegt und andererseits die Scheibe 10b vermittels des Teils 71a des ersten Ritzels 71 an diesem befestigt ist.

Die Wirkungsweise der in Figur 4 dargestellten Bremse ist, was die Verschleißnachstellung betrifft, wie folgt:

Wenn die Druckstange 6a durch die pneumatische Zuspanneinrichtung 6 verschoben wird (gemäß Fig. 1 nach links gerichtet), dann wird die Welle 30 um die erste Achse A1 gedreht, wobei der äußere Käfig 9a und mit ihm der innere Käfig 9b und die Scheibe 10a des Drehmomentbegrenzers 10 in dieser Drehung mitgenommen werden.

Falls sich die Schraube infolge des Verschleißes des Bremsbelags 2 entlang eines gewissen Abstands (Spiel) in Richtung des Bremsbelags bewegen kann, ohne dem wesentlichen Widerstand zu begegnen, welcher auftritt, wenn der Bremsbelag an die Scheibe angedrückt wird, werden die zweite Scheibe 10b, das Teil 71a und das Ritzel 71 durch die erste Scheibe 10a des Drehmomentbegrenzers 10 um die erste Achse A1 gedreht, was das zweite Ritzel 72 und die Spindel 72a zur Drehung um die zweite Achse A2 bringt. Durch die Formgebung der Spindel und des befestigten Bauteils 8 wird die Schraube 41 hierbei im Drehsinn um die Achse A2 gedreht und zwar in einer Richtung, welche das Strecken oder Ausfahren des Druckstücks 4 zur Folge hat, derart, daß das durch den Verschleiß des Bremsbelags 2 entstandene Spiel aufgenommen wird.

Wenn dieses Spiel aufgenommen ist, nimmt die Schraube vom Bremsschuh bzw. Druckstückkopf 5 eine Reaktion auf, welche nicht überwunden werden kann, indem am Ritzel 71 ein Drehmoment ausgeübt wird, welches größer ist als das, welches der Drehmomentbegrenzer 10 übertragen kann. Durch nachfolgende Drehung der Welle 30 um die erste Achse A1 in Richtung der Bremsbetätigung wird folglich nur die Drehung des Freilaufes und der Scheibe 10a ausgelöst, während die Scheibe 10b im Drehsinn fixiert bleibt und sich in von der Scheibe 10a abgewandeter Richtung bewegt, da die Kugeln 10d aus den Ausnehmungen herauslaufen, welche als Gehäuse für sie wirken. Das erste Ritzel 71 löst sich dann aus dem Eingriff mit dem zweiten Ritzel 72.

Wenn die Bremse in ihre Ausgangsposition zurückkehrt, indem die Welle 30 in entgegengesetzter Richtung gedreht wird, folgt nur der äußere Käfig 9a des Freilaufs dieser Drehbewegung der Welle, wobei diese Bewegung nicht auf den inneren Käfig 9b dieses Freilaufs übertragen wird.

Wenn der Bremsbelag abgenutzt ist und ersetzt werden muß, dann befindet sich die Schraube 41 infolge der Verschleißaufnahme bezüglich der Mutter 40 in einer verhältnismäßig ausgeschraubten Position, d. h. in einer relativ stark dem Druckstück 4 angenäherten Position, wobei das erste Ende 41a dieser Schraube die Ausnehmung 30c der Welle 30 verlassen hat.

Unter diesen Bedingungen ist es offensichtlich erforderlich, beim Austausch des Bremsbelags 2 die Schraube 41 zurück in Richtung des Inneren der Mutter 40 zu schrauben.

Dies geschieht in einfacher Weise, indem von außerhalb des Gehäuses 1 ein Drehmoment am Kopf bzw. Teil 71c der Spindel 71a, 71b, 71c ausgeübt wird; das Drehmoment setzt die Schraube 41 durch den Eingriff der Ritzel 71 und 72 in Umdrehung.

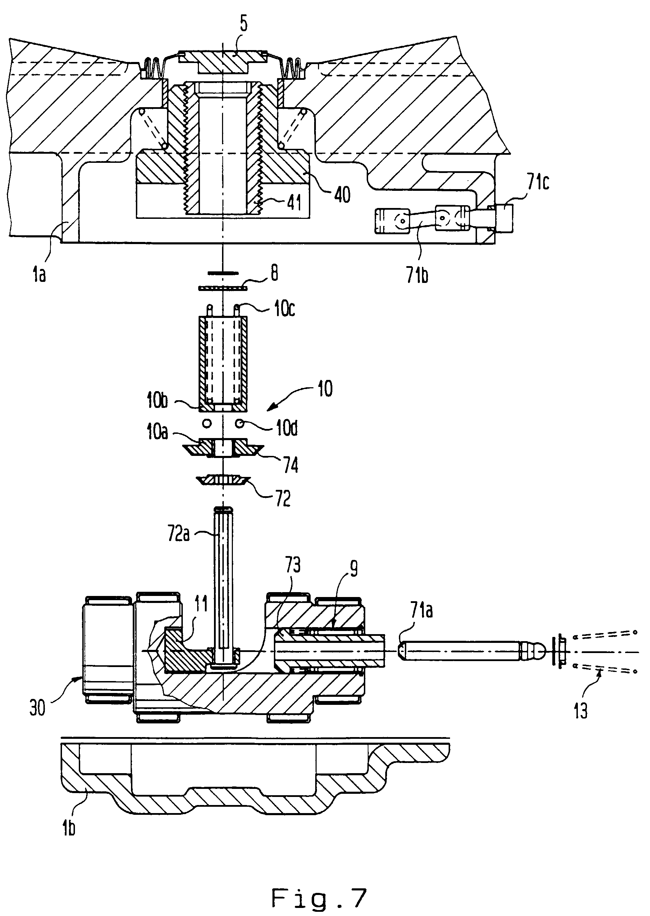

Nach dem zweiten Ausführungsbeispiel der zur Verschleißnachstellung dienenden Teile, wie in Fig. 6 und 7 dargestellt, befindet sich der Freilauf 9 immer noch in der Bohrung 30d der Welle 30, so daß sein äußerer Käfig 9a gegenüber Drehung abgesichert in der Bohrung ist, während der Drehmomentbegrenzer andererseits in der Schraube 41 ausgebildet ist.

Im besonderen ist der innere Käfig 9b des Freilaufs drehbar mittels einer Spindel 73a mit einem dritten Ritzel 73 verbunden, welches sich koaxial zum ersten Ritzel 71 und außerhalb zu diesem befindet und welches in Axialrichtung unter der Verspannung einer Feder 12 steht, um mit einem vierten Ritzel 74 in Eingriff zu gelangen. Das Ritzel 74 befindet sich in der Schraube 41 koaxial zum zweiten Ritzel 72 und an der Außenseite desselben.

Bei einer Bremse gemäß einer derartigen Ausführungsform nach der Erfindung befindet sich der Drehmomentbegrenzer 10 funktionell zwischen dem vierten Ritzel 74 und der Schraube 41 angeordnet, wobei die Wirkungsweise wie folgt ist:

Falls nachzustellendes Spiel besteht, wird die Drehung der Welle 30 auf den äußeren Käfig 9a des Freilaufs übertragen, ferner auf dessen inneren Käfig 9b, auf das dritte Ritzel 73, das vierte Ritzel 74, auf die erste Scheibe 10a des Drehmomentbegrenzers 10, auf die zweite Scheibe 10b und schließlich auf die Schraube 41, welche drehbar mit der zweiten Scheibe verbunden ist, jedoch sich frei entlang der Achse A2 verschieben läßt.

Sobald das Spiel aufgenommen bzw. nachgestellt ist, löst sich der Drehmomentbegrenzer wie im Fall der vorangehend erläuterten Ausführungsform und hört auf die Drehbewegung der Welle 30 auf die Schraube zu übertragen.

In gleicher Weise löst sich der Freilauf 9, wenn sich die Welle in Richtung der Ausgangsposition der Bremse dreht; die Schraube 41 kann nach Austausch des Reibbelages leicht in ihre Ausgangsposition zurückgebracht werden, indem ein Drehmoment am Teil 71c der Spindel 71a, 71b, 71c ausgeübt wird.

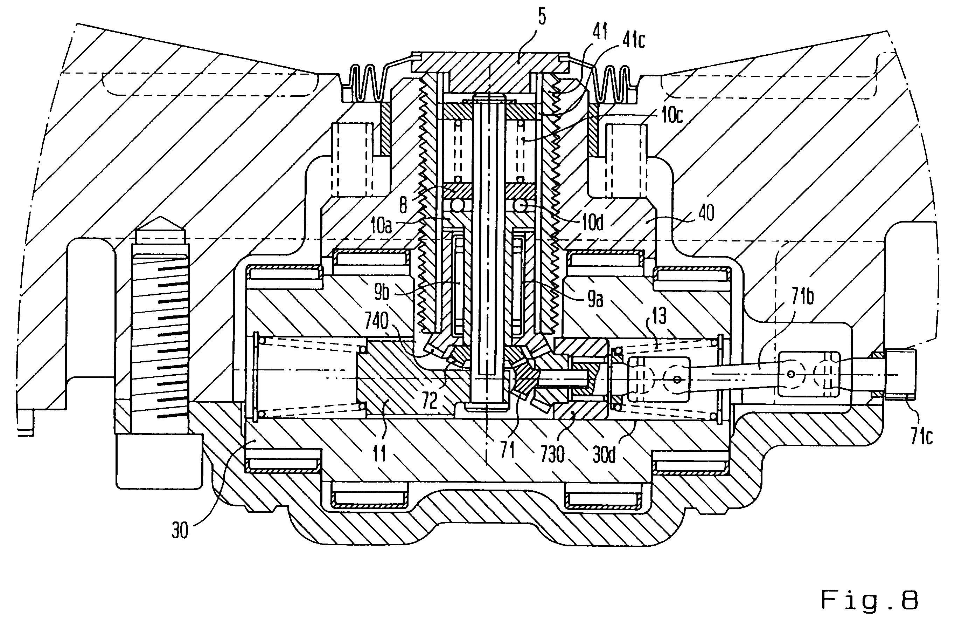

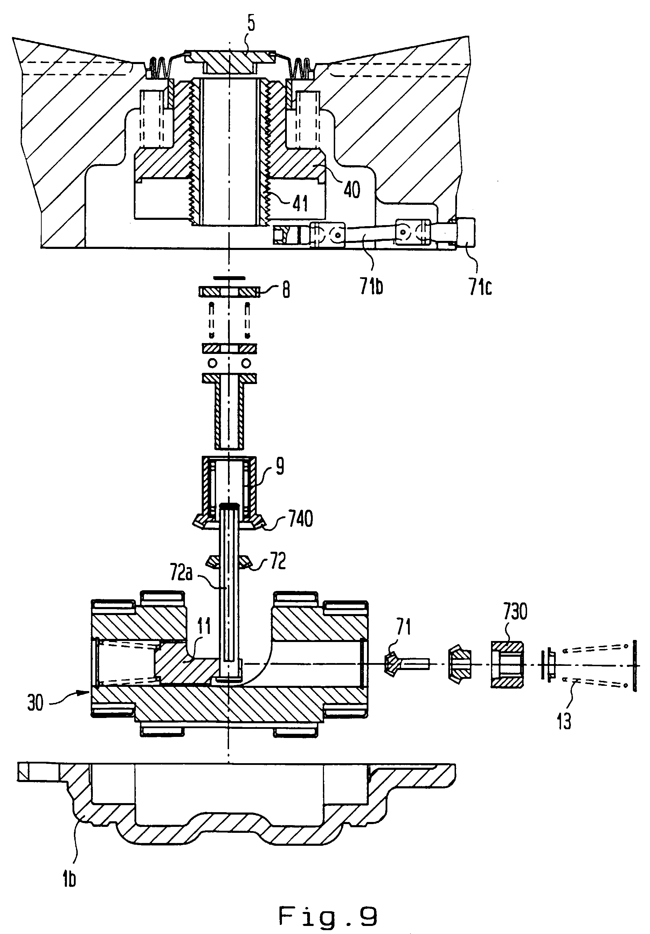

Bei der in Fig. 8 und 9 dargestellten dritten Ausführungsform der Bauteile zur Verschleißnachstellung befinden sich der Freilauf 9 und der Drehmomentbegrenzer 10 beide innerhalb der Schraube 41.

Es ist im besonderen ein drittes Ritzel 730 vorgesehen, welches koaxial und außerhalb des ersten Ritzels 71 befindlich in der Bohrung 30d der Welle 30 angeordnet und im Drehsinn zu dieser abgesichert ist. Dieses Ritzel kämmt mit einem vierten Ritzel 740, welches sich in der Schraube 41 koaxial zum zweiten Ritzel 72 und außerhalb desselben befindet. Der Freilauf 9 und der Drehmomentbegrenzer 10 verbinden drehbar innerhalb der Schraube 41 das erste Ritzel 71 mit dem zweiten Ritzel 72 und mit der Schraube 41.

Falls Spiel nachzustellen ist, wird die Drehung der Welle 30 auf das dritte Ritzel 730, auf das vierte Ritzel 740, auf den äußeren Käfig 9a des Freilaufs, der sich im vierten Ritzel befindet und drehbar an diesem befestigt ist, auf den inneren Käfig 9b des Freilaufs und auf den Drehmomentbegrenzer 10 übertragen, dessen erste Scheibe 10a drehbar am inneren Käfig 9b des Freilaufs befestigt ist, und dessen zweite Scheibe 10b durch das Bauteil 8 gebildet ist, wobei beide drehbar mit der Schraube 41 und mit dem zweiten Ritzel 72 verbunden sind.

Sobald Spiel aufgenommen bzw. nachgestellt wurde, löst sich der Drehmomentbegrenzer wie im Fall der vorangehend erläuterten Ausführungsformen und hört auf, die Drehbewegung der Welle 30 auf die Schraube zu übertragen.

In gleicher Weise löst sich der Freilauf 9, wenn sich die Welle in Richtung der Ausgangsposition der Bremse dreht; die Schraube kann bei ausgewechseltem Bremsbelag leicht in ihre Ausgangsposition zurückgeführt werden, indem ein Drehmoment am Teil 71c der Spindel 71a, 71b, 71c ausgeübt wird.

Gemäß Fig. 8 ist bei allen Ausführungsbeispielen eine Feder 13 verwendbar, um die Spindel bzw. das Teil 71b, welches sich durch das Gehäuse streckt, in Richtung des am ersten Ritzel 71 befestigten Teils 71a zu drücken. In diesem Fall ist es möglich, das erste Ritzel 71 in Richtung des zweiten Ritzels 72 zu drücken, um diese in Eingriff miteinander gelangen zu lassen.

Nach einem vorteilhaften Merkmal nach der Erfindung, welches auf die erläuterten Ausführungsbeispiele anwendbar ist, besitzt die Welle 30 zu beiden Seiten der Lagerteile 31a und 31b des Exzenters zwei weitere Lager, deren Achsen mit der ersten Achse A1 zusammenfallen und mittels welchen die Welle 30 im Gehäuse gehaltert ist.

Gemäß Fig. 1 und 4-9 ist jedes der Lagerteile 30a, 30b des Exzenters und jedes der Lagerteile 31a und 31b mittels entsprechender Nadellager 300a, 300b, 310a und 310b gegenüber dem Gehäuseaufbau abgestützt.

### Bezugszeichenliste

- 1: = Gehäuse
- 1a: = Teil
- 1b: = Teil
- 2: = Bremsbelag
- 3: = Hebelanordnung
- 4: = Druckstück
- 4a: = Ende
- 4b: = Ende
- 6: = Zuspanneinrichtung
- 6a: = Druckstange
- 8: = Bauteil
- 9: = Freilauf
- 9a: = Käfig
- 9b: = Käfig
- 10: = Druckmomentbegrenzer
- 10a: = Scheibe
- 10b: = Scheibe
- 10c: = Feder
- 10d: = Kugel
- 12: = Feder
- 13: = Feder
- 30: = Welle
- 30a: = Lagerteil
- 30b: = Lagerteil
- 30c: = Ausnehmung
- 30d: = Bohrung
- 31: = Exzenter
- 31a: = Lagerteil
- 31b: = Lagerteil
- 32: = Drehhebel
- 40: = Mutter
- 40a: = Lagerschale
- 40b: = Lagerschale
- 40c: = Gewindebohrung
- 41: = Schraube
- 41a: = Ende
- 41b: = Ende
- 41c: = Innenprofil
- 71: = Ritzel
- 71a: = Teil
- 71b: = Teil
- 71c: = Teil
- 72: = Ritzel
- 72a: = Spindel
- 73: = Ritzel
- 73a: = Spindel
- 74: = Ritzel
- 300a: = Nadellager
- 300b: = Nadellager
- 310a: = Nadellager
- 310b: = Nadellager
- 730: = Ritzel
- 740: = Ritzel
- A1: = Achse
- A2: = Achse

## Patentansprüche

1. Scheibenbremse, insbesondere für Fahrzeuge, mit folgenden Merkmalen:
a) die Scheibenbremse weist ein feststehendes Gehäuse (1) und wenigstens einen Bremsbelag (2) auf, welcher bei Betätigung der Bremse bezüglich des Gehäuses verlagerbar ist;
b) an der Scheibenbremse wirkt eine Hebelanordnung (3) mit einer Welle (30), welche sich um eine bezüglich des Gehäuses (1) feststehende erste Achse (A1) drehen läßt;
c) die Welle (30) trägt einen Exzenter (31), an welchem ein Drehhebel (32) der Hebelanordnung so befestigt ist, daß er sich im wesentlichen senkrecht zur ersten Achse (A1) erstreckt, derart, daß durch Drehung der Welle (30) um die erste Achse (A1), ausgelöst durch Druck auf den Drehhebel (32), die Bremse betätigbar ist;
d) der Exzenter (31) ist durch zwei erste Lagerteile (31a, 31b) gebildet, welche beidseitig des Drehhebels (32) angeordnet sind und einteilig mit diesem bestehen;
e) zu beiden Seiten der ersten Lagerteile (31a, 31b) befinden sich zwei weitere Lagerteile (30a, 30b), deren Achsen sich entlang der ersten Achse (A1) erstrekken und mittels welchen die Welle (30) durch das Gehäuse (1) getragen ist;
f) die Bremse ist mit einem Druckstück (4) versehen, welches innerhalb des feststehenden Gehäuses entlang einer zweiten, im wesentlichen senkrecht zur ersten Achse sich erstreckenden zweiten Achse (A2) verlagerbar ist und mit einem ersten Ende (4a) am Exzenter (31) anliegt, während das zweite, entgegengesetzte Ende (4b) gegenüber dem Bremsbelag (2) wirkt;
g) das Druckstück (4) trägt an seinem ersten Ende (4a) halbzylindrische seitliche Lagerschalen (40a, 40b), welche die ersten Lagerteile (31a, 31b) des Exzenters aufnehmen;
h) das Druckstück (4) trägt in einer zentralen Gewindebohrung (40c) eine mit ihm verschraubte, zum Zwecke der Verschleißnachstellung drehbare Schraube (41), wobei am exzenterabgewandten Ende der Schraube (41) der auf den Bremsbelag (2) einwirkende Druckstückkopf (5) angeordnet ist; und
i) der Bremse sind Mittel (71 - 74, 8, 9, 10) zur Nachstellung zugeordnet, welche den die erste Achse (A1) vom zweiten Ende (4b) des Druckstücks trennenden Abstand als Funktion des Verschleißzustandes des Bremsbelags strecken.

2. Scheibenbremse nach Anspruch 1, **gekennzeichnet durch** folgende Merkmale:
a) die Welle (30) weist in der der Gewindebohrung (40c) zugewandten Position eine Ausnehmung (30c) zur Aufnahme der Schraube auf, wenn sich diese in ihrer Relativlage über die Gewindebohrung (40c) hinaus erstreckt; und
b) es ist eine Bohrung (30d) in der Richtung der ersten Achse (A1) in die Welle (30) eingebracht, wobei die Mittel zur Verschleißnachstellung ein erstes Ritzel (71) aufweisen, welches sich in dieser Bohrung befindet und teilweise drehbar mit der Welle (30) verbunden ist, ferner ein zweites Ritzel (72), welches mit dem ersten Ritzel (71) im Eingriff ist und sich in der Schraube (41) entlang der zweiten Achse (A2) erstreckt, wobei das Ritzel drehbar mit dieser Schraube (41) verbunden ist und letztere zum Zwecke der Verschleißnachstellung bezüglich des zweiten Ritzels entlang der zweiten Achse verlagerbar ist.

3. Scheibenbremse nach Anspruch 1, **dadurch gekennzeichnet,** daß das erste Ritzel (71) eine Spindel (Teile 71a, 71b, 71c) enthält, die sich über die Bohrung (30d) der Welle (30) hinaus durch das Gehäuse (1) erstreckt, derart, daß von außerhalb des Gehäuses ein Drehmoment zur Anwendung gebracht werden kann.

4. Scheibenbremse nach Anspruch 2, **dadurch gekennzeichnet,** daß das zweite Ritzel (72) und die Schraube (41) über eine kinematische Kette drehbar mit der Welle (30) der drehbaren Hebelanordnung (3) verbunden sind, wobei die kinematische Kette einen Freilauf (9) und einen Drehmomentbegrenzer (10) enthält, und daß der Freilauf einen äußeren Käfig (9a) und einen inneren Käfig (9b) aufweist, die nur in einem Drehsinn miteinander verbunden sind.

5. Scheibenbremse nach Anspruch 4, **dadurch gekennzeichnet,** daß der äußere Käfig (9a) des Freilaufs in der Bohrung (39d) der Welle angeordnet und drehbar in dieser angeordnet ist, daß der Drehmomentbegrenzer (10) gleichfalls in der Bohrung der Welle ausgebildet ist, und daß das erste Ritzel (71) über diesen Drehmomentbegrenzer drehbar mit dem inneren Käfig (9b) des Freilaufs in Verbindung steht.

6. Scheibenbremse nach Anspruch 3, **dadurch gekennzeichnet,** daß der äußere Käfig (9a) des Freilaufs in der Bohrung (30d) der Welle ausgebildet und drehbar mit dieser verbunden ist, daß der innere Käfig (9b) des Freilaufs drehbar mit einem dritten Ritzel (73) verbunden ist, welches sich koaxial und außerhalb des ersten Ritzels (71) befindet und mit einem vierten Ritzel (74) kämmt, das sich außerhalb desselben befindet, und daß der Drehmomentbegrenzer (10) in der Schraube angeordnet und funktionell zwischen dem vierten Ritzel und dieser Schraube (41) zugeschaltet ist.

7. Scheibenbremse nach Anspruch 3, **dadurch gekennzeichnet,** daß sich ein drittes Ritzel (730) koaxial und außerhalb des ersten Ritzels (71) innerhalb der Bohrung (30d) der Welle befindet und drehbar mit dieser verbunden ist, daß dieses dritte Ritzel (730) mit einem vierten Ritzel (740) kämmt, welches sich in der Schraube (41) koaxial bezüglich des zweiten Ritzels (72) und außerhalb desselben befindet, und daß der Freilauf (9) und der Drehmomentbegrenzer (10) innerhalb der Schraube (41) ausgebildet sind und drehbar das vierte Ritzel (740) mit dem zweiten Ritzel (72) und mit der Schraube (41) verbinden.

8. Scheibenbremse nach einem der vorangehenden Ansprüche, **dadurch gekennzeichnet,** daß der Drehmomentbegrenzer (10) der Kugelbauart entspricht.

## Claims

1. Disc brake, especially for vehicles, comprising the following features:
(a) the disc brake comprises a stationary housing (1) and at least one brake lining (2) which is adapted to be shifted relative to said housing upon application of the brake;
(b) a lever system (3) with a shaft (30) acts upon said disc brake, which shaft is adapted for rotation about a first axis (A1) stationary with respect to said housing (1);
(c) said shaft (30) carries an eccentric (31) on which a rotating lever (32) of said lever system is fixed in a way that it extends substantially orthogonally on said first axis (A1), such that the brake can be operated on account of the rotation of said shaft (30) about said first axis (A1), which is triggered by pressure produced on said rotating lever (32);
(d) said eccentric (31) is formed by two first bearing parts (31a, 31b) which are disposed on either side of said rotating lever (32) and are integral therewith;
(e) on either side of said first bearing parts (31a, 31b) two further bearing parts (30a, 30b) are located which have axes extending along said first axis (A1) and by means of which said shaft (30) is carried through said housing (1);
(f) the brake is provided with a thrust member (4) which, within said stationary housing, is adapted to be shifted along a second axis (A2) extending in a direction substantially orthogonal on said first axis, and which bears against said eccentric (31) by a first end (4a) whilst the second opposite end (4b) is operative opposite to said brake lining (2);
(g) said thrust member (4) carries, on its first end (4a), semi-cylindrical lateral bearing shells (40a, 40b) which receive said first bearing parts (31a, 31b) of said eccentric;
(h) said thrust member (4) carries, in a central threaded bore (40c), a screw (41) screwed-fastened therein and rotatable for the purpose of adjustment for wear compensation, with a thrust member head (5), which acts upon said brake lining (2), being disposed on that end of said screw (41) which is turned away from said eccentric; and
(i) the brake is associated with means (71 - 74, 8, 9, 10) for re-adjustment which extend the spacing separating said first axis (A1) from the second end (4b) of said thrust member as a function of the wear condition of said brake lining.

2. Disc brake according to Claim 1, **characterised by** the following features:
(a) in its position facing said threaded bore (40c), the shaft (30) presents a recess (30c) for receiving said screw when the latter extends beyond said threaded bore (40c) in its relative position; and
(b) a bore (30d) is provided in said shaft in the direction of said first axis (A1), with said means for adjustment for wear compensation comprising a first pinion (71) located in this bore and partly connected for rotation with said shaft (30), furthermore a second pinion (72) which meshes with said first pinion (71) and extends in said screw (41) along said second axis (A2), with said pinion being connected for rotation with this screw (41) and with the latter being adapted to be shifted along said second axis for the purpose of adjustment for wear compensation, relative to said second pinion.

3. Disc brake according to Claim 1, **characterised in** that said first pinion (71) includes a spindle (pads 71a, 71b, 71c) which extends through said housing (1) beyond said bore (30d) of said shaft (30), in such a way that a torque may be applied from outside said housing.

4. Disc brake according to Claim 2, **characterised in** that said second pinion (72) and said screw (41) are connected via a kinematic linkage for rotation with said shaft (30) of said rotatable lever system (3), with said kinematic linkage including a free-wheel (9) and a torque limiter (10), and in that said free-wheel comprises an outside cage (9a) and an inside cage (9b) which are connected to each other only in one sense of rotation.

5. Disc brake according to Claim 4, , **characterised in** that said outside cage (9a) of said free-wheel is arranged in said bore (39d) of said shaft and is arranged for rotation therein, that said torque limiter (10) is equally formed in said bore of said shaft, and that said first pinion (71) is connected for rotation to said inside cage (9b) of said free-wheel via this torque limiter.

6. Disc brake according to Claim 3, **characterised in** that said outside cage (9a) of said free-wheel is formed in the bore (30d) of said shaft and is connected for rotation therewith, that said inside cage (9b) of said free-wheel is connected for rotation to a third pinion (73) which is provided coaxially and outside said first pinion (71) and meshes with a fourth pinion (74) which is located outside thereof, and that said torque limiter (10) is disposed in said screw and is additionally connected in terms of function between this fourth pinion and this screw (41).

7. Disc brake according to Claim 3, **characterised in** that a third pinion (730) is provided coaxially and outside said first pinion (710) inside the bore (30d) of said shaft and is connected for rotation therewith, that this third pinion (730) meshes with a fourth pinion (740) which is provided coaxially relative to said second pinion (72) and outside thereof and that said free-wheel (9) and said torque limiter (10) are formed inside said screw (41) and connect said fourth pinion (740) with said second pinion (72) and with said screw (41) for rotation.

8. Disc brake according to any of the preceding Claims, **characterised in** that said torque limiter (10) corresponds to the spherical design.

## Revendications

1. Frein à disque, notamment pour véhicules, comprenant les caractéristiques suivantes:
(a) le frein à disque comprend un carter stationnaire (1) et au moins une garniture de frein (2) prévue à être déplacée relativement audit carter après l'application du frein;
(b) un arrangement de leviers (3) à un arbre (30) prend de l'influence sur ledit frein à disque, lequel arbre est rotatif autour d'un premier axe (A1) qui est stationnaire relativement audit carter (1);
(c) ledit arbre (30) porte un excentrique (31), sur lequel se fixe un levier rotatif (32) dudit arrangement de leviers de façon qu'il s'étend essentiellement en sens orthogonal sur ledit premier axe (A1), d'une manière qu'on puisse appliquer le frein en vertu de la rotation dudit arbre (30) autour dudit premier axe (A1), ce qui est provoqué par la pression produite sur ledit levier rotatif (32);
(d) ledit excentrique (31) est formé par deux premiers éléments de palier (31a, 31b) qui sont disposés des deux côtés dudit levier rotatif (32) et qui y constituent des pièces intégrales;
(e) des deux côtés desdits premiers éléments de palier (31a, 31b) se trouvent deux autres éléments de palier (30a, 30b) dont les axes s'étendent le long dudit premier axe (A1) et moyennant desquels ledit arbre (30) est porté à travers dudit carter (1);
(f) le frein comprend un membre de pression (4), qui, à l'intérieur dudit carter stationnaire, est déplaçable le long d'un deuxième axe (A2), qui s'étend en une direction essentiellement orthogonale sur ledit premier axe, et qui porte contre ledit excentrique (31) par une première extrémité (4a), pendant que sa deuxième extrémité opposée (4b) agit en opposition à ladite garniture de frein (2);
(g) ledit membre de pression (4) porte, sur sa première extrémité (4a), des coquilles de coussinet latérales semi-cylindriques (40a, 40b) qui reçoivent lesdites premiers éléments de palier (31a, 31b) dudit excentrique;
(h) ledit membre de pression (4) porte, dans un alésage fileté (40c), une vis (41) vissée à son intérieur et disposée à tourner pour un rajustage afin de neutraliser l'usure, une tête (5) dudit membre de pression, qui agit sur ladite garniture de frein (2), étant disposée sur cette extrémité de ladite vis (41) qui est détournée dudit excentrique; et
(i) le frein est affecté aux moyens (71 - 74, 8, 9, 10) de rajustage, qui étendent l'interstice qui sépare ledit premier axe (A1) de la deuxième extrémité (4b) dudit membre de pression en fonction de l'état d'usure de ladite garniture de frein.

2. Frein à disque selon la revendication 1, **caractérisé par** les caractéristiques suivantes:
(a) en sa position en face dudit alésage fileté (40c), ledit arbre (30) présente un évidement (30c) à y recevoir ladite vis quand la dernière s'étend au delà dudit alésage fileté (40c) en sa position relative; et
(b) un alésage (30d) est formé dans ledit arbre en direction dudit premier axe (A1), lesdits moyens de rajustage afin de neutraliser l'usure comprenant un premier pignon (71) disposé dans cet alésage et relié, en partie, de façon à tourner avec ledit arbre (30), de plus un deuxième pignon (72) engagé dans ledit premier pignon (71), qui s'étend dans ladite vis (41) le long dudit deuxième axe (A2), ledit pignon étant relié pour rotation avec cette vis (41) et la dernière étant déplaçable le long dudit deuxième axe pour le rajustage afin de neutraliser l'usure, relativement audit deuxième pignon.

3. Frein à disque selon la revendication 1, **caractérisé en ce** que ledit premier pignon (71) comprend une broche (éléments 71a, 71b, 71c) qui s'étend à travers dudit carter (1) au-delà dudit alésage (30d) dudit arbre (30), de façon qu'on puisse appliquer un couple de l'extérieur dudit carter.

4. Frein à disque selon la revendication 2, **caractérisé en ce** que ledit deuxième pignon (72) et ladite vis (41) sont reliés, via une chaîne cinématique, pour tourner avec ledit arbre (30) dudit arrangement de leviers (3) rotatif, ladite chaîne cinématique comprenant une roue libre (9) et un limiteur de couple (10), et en ce que ladite roue libre comprend une cage extérieure (9a) et une cage intérieure (9b), qui ne sont reliées l'une à l'autre qu'un un seul sens de rotation.

5. Frein à disque selon la revendication 4, , **caractérisé en ce** que ladite cage extérieure (9a) de ladite roue libre est disposée dans ledit alésage (39d) dudit arbre, en étant disposée pour y tourner, en ce que ledit limiteur de couple (10) est également formé dans ledit alésage dudit arbre, et en ce que ledit premier pignon (71) est relié, de façon à tourner, à ladite cage intérieure (9b) de ladite roue libre via ce limiteur de couple.

6. Frein à disque selon la revendication 3, **caractérisé on ce** que ladite cage extérieure (9a) de ladite roue libre est formée dans ledit alésage (30d) dudit arbre, en étant reliée de façon à tourner avec le dernier, en ce que ladite cage intérieure (9b) de ladite roue libre est reliée, de façon rotatif, à un troisième pignon (73), qui est prévu, de façon coaxiale, à l'extérieur dudit premier pignon (71) et se trouve en prise dans un quatrième pignon (74), disposé à l'extérieur, et en ce que ledit limiteur de couple (10) est disposé dans ladite vis et est de plus relié au niveau de fonction entre ce quatrième pignon et cette vis (41).

7. Frein à disque selon la revendication 3, **caractérisé en ce** qu'un troisième pignon (730) est disposé de façon coaxiale à l'extérieur dudit premier pignon (710) audedans dudit alésage (30d) dudit arbre, en étant relié pour tourner avec le dernier, en ce que ce troisième pignon (730) se trouve en prise dans un quatrième pignon (740), qui est disposé de façon coaxiale relativement audit deuxième pignon (72) à l'extérieur du dernier, et en ce que ladite roue libre (9) et ledit limiteur de couple (10) sont formés à l'intérieur de ladite vis (41) et reliés et relient ledit quatrième pignon (740) avec ledit deuxième pignon (72) et avec ladite vis (41) pour une rotation.

8. Frein à disque selon une quelconque des revendications précédentes, **caractérisé on ce** que ledit limiteur de couple (10) corresponde à une forme de construction sphérique.
